Europäisches Patentamt

European Patent Office

Office européen des brevets

(11) Publication number: **0 500 163 A1**

## EUROPEAN PATENT APPLICATION

(21) Application number: **92200358.7**

(22) Date of filing: **07.02.92**

(51) Int. Cl.5: **A01G 9/10**

(30) Priority: **20.02.91 NL 9100301**

(43) Date of publication of application:
**26.08.92 Bulletin 92/35**

(84) Designated Contracting States:
**AT BE CH DE DK ES FR GB IT LI LU NL SE**

(71) Applicant: **Visser 's-Gravendeel Holding B.V.**
**Beneden Havendijk 115a**
**NL-3295 XB 's-Gravendeel(NL)**

(72) Inventor: **Visser, Anthony**
**Seringenstraat 43**
**NL-3295 RN 's-Gravendeel(NL)**

(74) Representative: **Eveleens Maarse, Pieter et al**
**Arnold & Siedsma Sweelinckplein 1**
**NL-2517 GK The Hague(NL)**

(54) **Container for culture material.**

(57) The invention relates to a container (1) for culture material suitable for containing one plant, which container is provided with vertically extending side walls (2,3,4,5). The mechanical handling of the containers is hereby improved. Furthermore, they do not tip over when pushed against each other, which is often the case with the usually conical containers of the prior art.

In preference the container has a rectangular cross section; this increases manageability, while a complete measure of filling can also be obtained. Square containers moreover provide rotational symmetry.

The invention also relates to carriers (9) suitable for these containers, which carriers are provided with a removable plate (10) so that the containers can easily be pushed off the carrier.

FIG.2

EP 0 500 163 A1

The invention relates to a container for a quantity of culture material suitable for containing one plant, which container comprises a cavity for the culture material opened at the top.

Such containers are generally known, for instance in the form of flower pots, the so-called jiffi-pot and other similar containers.

In general such containers have a truncated cone shape. This shape generally results in poor manageability of the containers and the plants received therein since, when the containers are pushed against each other, they are often moved into a tilted position and sometimes even tip over.

The object of the invention is to provide such a container which is easier to handle and wherein such containers can be pushed against each other without this danger of tilting or tipping over. It is also the endeavour herein to provide a container which allows of great density of culture material and of plants, wherein the containers can be placed against each other with a great density.

This object is achieved in that the container has vertically extending side walls.

As a consequence of this step, when two containers make mutual contact, for instance during transport or handling, these containers do not exert a force on one another such that they push one another over. The straight walls also enable the containers to be pushed more closely against each other so that no space is left anywhere between the containers.

The invention will be elucidated hereinafter with reference to the annexed drawings, in which:

fig. 1 shows a partly broken away perspective view of a first embodiment of a container according to the invention;

fig. 2 is a perspective view of the combination of a carrier for use with the container according to the invention;

fig. 3 shows a top view of a device for handling containers according to the invention;

fig. 4 shows a perspective view of a second embodiment of a container according to the invention; and

fig. 5 is a perspective view of a third embodiment of a container according to the invention.

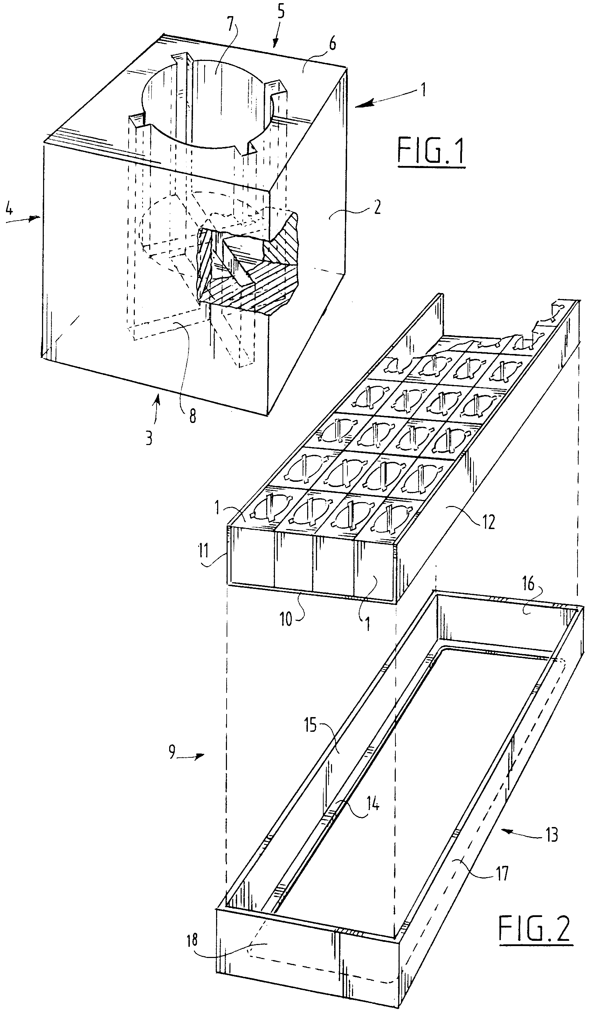

The container depicted in fig. 1 is formed by a body 1 having the shape of a rectangular parallelepiped and wherein the horizontal cross section is formed by a square. As a consequence the sides 2, 3, 4 and 5 form parallel pairs and all extend in a vertical direction.

Recessed into the upper surface 6 is a cavity 7, the shape of which is circular cylindrical. The cavity is arranged centrally in the body 1, although this is not however essential.

Arranged concentrically of the cavity 7 is a star-shaped channel 8. This latter serves for the removal from the cavity 7 of a ball of earth that may be situated therein having a plant therein. Reference is made in this respect to the European patent application with publication number 0 323 674 in the name of Visser 's-Gravendeel Holding B.V.

It will be apparent that the container 1 with the above described outward appearance formed by the body 1 is easily manageable; this body 1 can for instance be gripped easily on two oppositely located side walls, while it is possible to slide such bodies on a flat plate when they are in close mutual proximity.

Fig. 2 shows a carrier 9 for bodies 1 which is formed by a plate 10 which is provided on opposite sides with vertical walls 11, 12. A U-shaped configuration is thus obtained. The width of the plate 10 is herein selected such that it corresponds with a whole number multiple of the width of the side wall of body 1. This enables a row of such bodies 1 to be placed in close mutual proximity on the plate 10 without space being left over. The same applies in the other direction of plate 10; this length dimension preferably corresponds with a whole number multiple of the breadth of the body 1. As a result of these two-dimensional steps a complete filling of the carrier 9 can be achieved.

The carrier 9 further comprises a tray 13 formed by a base plate 14, in which an opening is arranged, and four side walls 15, 16, 17 and 18. The plate 10 fits inside the tray 13 whether filled or not, so that tray 13 together with the plate placed therein forms an easily manageable whole irrespective of the fact of whether or not the thus formed carrier is filled with containers 1.

To remove the containers or bodies from the thus formed carrier the plate 10 is moved upward relative to the tray 13, the opening arranged in the base plate 14 serving for this purpose. Plate 10 can be pressed upward relative to the tray 13 through this opening with a suitable pusher member.

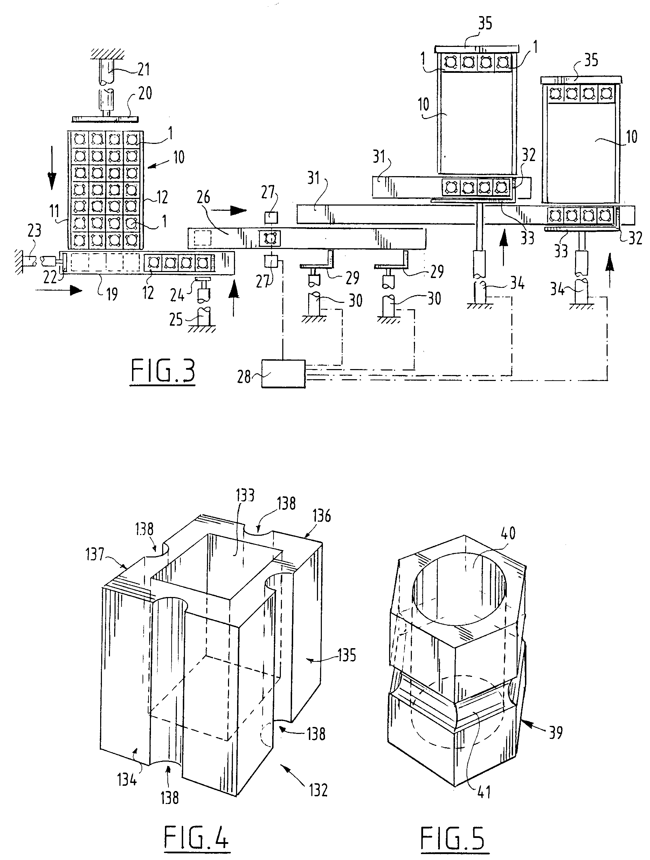

Shown in fig. 3 is an apparatus for sorting plants present in the containers 1. This apparatus is formed by a support (not shown in the drawing) for plates 10, which support will otherwise be formed in many cases by the member with which the plate 10 is moved upward relative to tray 13.

A conveyor belt 19 is arranged at the same level as the support. The containers 1 present on plate 10 are pushed row by row onto the conveyor belt 19 by means of a pusher member 20 driven by a cylinder 21.

When such a row is wholly situated on the belt 19 a second pusher member 22 comes into operation which further transports the row of containers 1 over the belt 19. The containers 1 are subsequently moved one by one onto a conveyor belt 26 by a third pusher member 24 that is driven by a cylinder 25. This combination of devices forms a so-called individualizing apparatus. It is also possible to employ a conveyor belt instead of a belt 19 with a pusher member 22. The speed of conveyor belt 26 will then have to be greater than that of the first conveyor belt in order to ensure a good individualizing apparatus.

As a consequence hereof the containers 1 are moved forward one by one over the conveyor belt 26 with a considerable interspacing. They herein pass a detection device 27 which determines the quality of the plant present in the container; it is possible here to envisage a light meter which determines the number of leaves of the plant or a colorimeter which ascertains the colour of the leaf of the plants. It is of course possible to apply a different criterion. The thus obtained signals are fed to a central control unit 28 to which the detection device 27 is connected.

Subject to the signals, and thereby to the relevant criteria, sorting pusher members 29 are moved by means of relevant cylinders 30. When they are actuated by the relevant cylinder 30 these sorting pusher members 29 move the container 1 passing at the relevant moment from the conveyor belt 26 to a relevant secondary conveyor belt 31. Depending on the measurement result of the detection device one of the two cylinders 30 is operated, wherein the relevant body or container 1 is moved onto the appropriate sorting conveyor belt 31.

Arranged at the end of each of the secondary conveyor belts 31 is a wall 32. The containers 1 supplied via the relevant conveyor belts collect against the respective walls 32. When the number of containers 1 collected against the wall 32 is equal to the number of containers 1 that fits in the width onto a plate 10, which is detected by a detection device not shown in the drawing, a pusher member 33 driven by a cylinder 34 comes into operation. The pusher member 33 pushes the thus formed row of bodies 1 onto a plate 10 arranged at the location of the pusher member 33. Arranged herein on the side of the thus disposed plate 10 remote from the pusher member 33 is a wall 35 which serves as stop wall for the rows of bodies 1 delivered by the pusher member 33. In this way the plates 10 are filled with successive rows of bodies 1.

As soon as the relevant plates 10 are filled they can be taken away and placed in an appropriate tray 13, although it is also possible for the tray 13 to be situated beneath plate 10 and for it to be moved upward after filling of the plate 10 is completed. The carrier 9 can then be removed in its entirety and a new plate 10 arranged on the appropriate position opposite the pusher member 33. This of course applies for both carriers 10 shown in fig. 3. It is of course possible to set the sorting criteria such that more collection points are necessary; the apparatus shown in fig. 3 can then be enlarged.

It can be seen herefrom that it is easy to subject the containers according to the present invention to a transporting, handling or sorting process.

Fig. 4 shows another embodiment of the carrier according to the invention. The container in fig. 4 is formed by a rectangular block 132 in which is arranged a rectangular cavity 133. The container 4 is also provided in this case with a square vertical cross section, although this is not per se necessary; it is possible to use a rectangular cross section for reasons of symmetry; in the case of a square it is not important in which direction the container is gripped and it is attractive to embody the container with the square vertical cross section. In order to save material a vertical groove 138 is arranged in each side wall 134, 135, 136 and 137. This groove has no adverse effect on the manageability of the container, while a considerable material saving and, when a relatively heavy material is used for the container, a considerable weight saving are achieved. Account must of course be taken in the dimensioning of such a groove that the container retains sufficient strength.

It is equally possible to arrange the groove 38 not in vertical but in horizontal direction.

Fig. 5 shows a fourth embodiment of a container which is formed by a body 39 having the horizontal cross section of a regular hexagon and wherein a circular cylindrical opening 40 is arranged.

A groove 41 is also arranged here to save material, which in the present case extends in horizontal direction.

It will be apparent that other configurations of such containers are possible.

**Claims**

1. Container for a quantity of culture material suitable for containing one plant, which container comprises a cavity for the culture material opened at the top, **characterized in that** the container has vertically extending side walls.

2. Container as claimed in claim 1, **characterized in that** the horizontal cross section of the side walls is rectangular.

3. Container as claimed in claim 2, **characterized in that** the horizontal cross section of the side walls is a square.

**4.** Container as claimed in claim 1, **characterized in that** the horizontal cross section of the side walls is hexagonal.

**5.** Container as claimed in claim 1, 2, 3 or 4, **characterized in that** the side walls are provided with a vertical recess.

**6.** Container as claimed in any of the claims 1-5, **characterized in that** the side walls are provided with a horizontal recess.

**7.** Container as claimed in any of the foregoing claims, **characterized in that** the cavity for the culture material is cylindrical and that a continuous channel with a star-shaped configuration is arranged concentrically of this cavity.

**8.** Carrier for containers as claimed in any of the foregoing claims, **characterized by** a plate and a tray into which the plate fits and wherein in the base of the tray at least one opening is arranged.

**9.** Carrier as claimed in claim 8, **characterized in that** the plate is provided on two opposite sides with an upward extending wall.

**10.** Carrier as claimed in claim 8 or 9, **characterized in that** the breadth of the plate corresponds with a whole number multiple of a width of a container as claimed in any of the claims 1-7.

**11.** Carrier as claimed in claim 8, 9 or 10, **characterized in that** the length of the plate corresponds with a whole number multiple of a width of a container as claimed in any of the claims 1-7.

**12.** Device for handling a container as claimed in any of the foregoing claims, **characterized by** gripping means for gripping rectangular bodies on the sides or for pushing against sides of a rectangular body.

**13.** Device for removing containers as claimed in any of the claims 1-7, with a carrier as claimed in any of the claims 8-11, **characterized by** a pusher member for pushing a plate as claimed in any of the claims 8-11 out of a tray of any of the claims 8-11 and a pusher member for subsequently pushing from the plate the separate rows of containers as claimed in any of the claims 1-7 present on the plate.

**14.** Device for loading containers as claimed in any of the claims 1-7 onto a carrier as claimed in any of the claims 8-11, **characterized by** a pusher member for pushing rows of containers onto a plate as claimed in any of the claims 8-11 and a pusher member for arranging a tray from beneath around the plate after filling of the containers.

**15.** Device for sorting plants present in containers comprising a device as claimed in claim 13 for removing containers from a carrier, a sorting device and a device as claimed in claim 14 for loading containers onto a carrier.

FIG.1

FIG.2

FIG.3

FIG.4

FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | GB-A-2 045 044 (GRUBER)<br>* page 3, line 129 - page 4, line 47; claim 1; figure 1 * | 1-4 | A01G9/10 |
| Y | | 7-13,15 | |
| | --- | | |
| D,Y | EP-A-0 323 674 (VISSER S'GRAVENDEEL HOLDING)<br>* column 2, line 26 - line 40 *<br>* column 5, line 58 - column 6, line 43; figures 1,5 * | 7,13,15 | |
| | --- | | |
| Y | NL-A-8 900 418 (VEENMAN)<br>* page 2, line 8 - page 3, line 33; figures 1-3 * | 8-11 | |
| | --- | | |
| Y | EP-A-0 090 474 (VISSER TUINBOUWTECHNIEK EN HOUT)<br>* page 4, line 30 - page 5, line 33; figure 4 * | 12 | |
| | --- | | |
| X | EP-A-0 311 519 (G.A.E.C. DES PEPINIERES ALPES-PROVENCE)<br>* column 4, line 58 - column 6, line 58; figures 1-5 * | 1,3,5 | |
| | ----- | | TECHNICAL FIELDS SEARCHED (Int. Cl.5 )<br><br>A01G |

The present search report has been drawn up for all claims

| Place of search | Date of completion of the search | Examiner |
|---|---|---|
| THE HAGUE | 29 MAY 1992 | HERYGERS J.J. |